(19) **Europäisches Patentamt / European Patent Office / Office européen des brevets**

(11) **EP 4 348 199 B1**

(12) **FASCICULE DE BREVET EUROPEEN**

(45) Date de publication et mention de la délivrance du brevet:
**02.04.2025 Bulletin 2025/14**

(21) Numéro de dépôt: **22733199.8**

(22) Date de dépôt: **30.05.2022**

(51) Classification Internationale des Brevets (IPC):
*G01J 5/53* (2022.01)    *G01J 5/80* (2022.01)
*G01J 5/061* (2022.01)    *G01J 5/08* (2022.01)
*H04N 25/67* (2023.01)    *H04N 25/673* (2023.01)
*H04N 5/33* (2023.01)    *H04N 23/23* (2023.01)
*G01J 5/00* (2022.01)

(52) Classification Coopérative des Brevets (CPC):
**G01J 5/80; G01J 5/061; G01J 5/0814; G01J 5/53; H04N 23/23; H04N 25/673;** G01J 2005/0077

(86) Numéro de dépôt international:
**PCT/FR2022/051012**

(87) Numéro de publication internationale:
**WO 2022/254137 (08.12.2022 Gazette 2022/49)**

(54) **CALIBRAGE EMBARQUÉ D'UNE MATRICE DE PIXELS D'UN CAPTEUR INFRAROUGE**

ON-BOARD KALIBRIERUNG EINER PIXELMATRIX IN EINEM INFRAROTSENSOR

ON-BOARD CALIBRATION OF A PIXEL MATRIX IN AN INFRARED SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2021 FR 2105759**

(43) Date de publication de la demande:
**10.04.2024 Bulletin 2024/15**

(73) Titulaire: **Safran Electronics & Defense 75015 Paris (FR)**

(72) Inventeurs:
• **DAVENEL, Arnaud**
  **77550 MOISSY-CRAMAYEL (FR)**
• **ALLIOT, Stephane**
  **77550 MOISSY-CRAMAYEL (FR)**

(74) Mandataire: **Regimbeau**
  **20, rue de Chazelles**
  **75847 Paris Cedex 17 (FR)**

(56) Documents cités:
US-A- 4 965 448    US-A1- 2009 079 854
US-A1- 2009 250 614    US-A1- 2015 346 330

**Description**

DOMAINE TECHNIQUE GENERAL

Le domaine de l'invention est celui de la maintenance préventive de capteurs matriciels utilisés dans des dispositifs d'imagerie infrarouge. L'invention concerne plus particulièrement un procédé et un dispositif permettant de mettre à jour un calibrage d'une telle matrice intégrée dans un dispositif d'imagerie infrarouge et plus particulièrement, permettant une correction de disparités entre les pixels de la matrice, sans démontage de la matrice ni du système optronique intégrant la matrice.

ETAT DE LA TECHNIQUE

Les capteurs matriciels utilisés en imagerie infrarouge (IR) comprennent une matrice de pixels sensibles au rayonnement infrarouge, qui est disposée au plan focal d'un système optique. Une telle matrice est aussi connue sous le nom de matrice plan focal (en anglais, « Focal Plane Array »).

De manière connue, les pixels de la matrice soumis à un flux infrarouge uniforme et au même temps d'intégration ne vont pas avoir la même réponse. Il y a des disparités d'offset (décalage de l'ordonnée à l'origine, proportionnel au bruit d'obscurité) et de gain d'un pixel à l'autre, et ces disparités ou non-uniformités spatiales doivent être corrigées pour améliorer la qualité d'image. En outre, ces disparités spatiales varient avec le temps.

On sait corriger cette dispersion des réponses individuelles des pixels dans le but d'améliorer la qualité finale de l'image.

On établit pour cela des matrices ou tables de gain et d'offset pour le capteur d'image considéré, qui fournissent pour chaque pixel, la correction d'offset et de gain à appliquer à chaque valeur de pixel d'une image acquise par la matrice de pixels.

On s'intéresse plus particulièrement dans la présente à l'établissement de la table de gain, qui nécessite de pouvoir imager une scène à deux températures différentes. En effet, l'offset étant dépendant du temps d'intégration, on ne peut pas utiliser le temps d'intégration comme variable pour calculer le gain.

Une table de de gain est obtenue au cours d'une phase de calibration en usine en prenant deux images infrarouges à deux températures différentes. On utilise pour cela des sources émettrices de flux uniformes connues sous le nom de corps noir, contrôlées électroniquement pour émettre à des températures différentes.

Un problème est qu'au cours de la vie d'un capteur d'image infrarouge les non-uniformités spatiales peuvent varier dans le temps pour plusieurs raisons : mécaniques (vieillissement de pièces), stabilité du matériau sensible au rayonnement IR, stabilité de la machine à froid associé au capteur, etc.

Dès lors, la table de gain obtenue en usine ne permet plus de corriger correctement les non-uniformités, les performances du capteur se dégradent alors avec le temps.

Pour pallier ce problème, il est connu dans les systèmes optiques à miroirs de balayage d'intégrer un ou plusieurs corps noirs hors du champ de l'imageur, avec une électronique dédiée pour obtenir des flux d'émission uniformes à des températures différentes. Et lorsque l'on doit recalculer la table de gain, on utilise le mécanisme de balayage selon une direction pour permettre l'observation du ou des corps noirs par l'imageur. On calcule alors la table de gain de la même façon qu'en usine à partir de l'image de flux uniformes à des températures différentes. Toutefois, ces systèmes à balayage tendent à disparaitre car trop coûteux et complexes. L'intégration du ou des corps noirs et d'une électronique associée pour contrôler leur témpérature d'émission est encombrante et induit une consommation électrique.

Une autre solution est de recalibrer épisodiquement le capteur sur un banc dédié. Or, ceci n'est pas toujours possible et nécessite de démonter le capteur.

Le brevet nord-américain US 4,965,448 divulgue la re-calibration de la table des gains pour un détecteur linéaire de rayonnement infrarouge.

PRESENTATION DE L'INVENTION

L'invention propose de pallier au moins un de ces inconvénients.

A cet effet, l'invention propose, selon un premier aspect, un procédé de calibrage in situ d'une matrice de pixels d'un capteur infrarouge, ledit capteur infrarouge comprenant un système optique, une matrice de pixels disposée dans le plan focal du système optique, le système optique permettant de focaliser un rayonnement sur la matrice de pixels, le procédé comprenant les étapes suivantes mises en œuvre dans une unité de traitement connectée au capteur infrarouge, la matrice de pixels étant caractérisée par une table de gain des pixels:

- acquisition par la matrice de pixels d'une première séquence d'images du rayonnement d'un écran noir correspondant à une scène à une première température ;

- acquisition par la matrice de pixels d'une deuxième séquence d'images du rayonnement de la matrice de pixels réfléchi partiellement correspondant à une scène à une deuxième température ;
- traitement des première et deuxième séquences d'images de manière à mettre à jour la table de gain en calculant une correction représentative du vieillissement et de la réponse des pixels de la matrice de pixels.

L'invention, selon le premier aspect, est avantageusement complétée par les caractéristiques suivantes, prises seules ou en une quelconque de leur combinaison techniquement possible :

- le procédé comprend une étape de configuration du système optique du capteur infrarouge de manière acquérir la première séquence d'images ou la deuxième séquence d'images ;
- le procédé comprend une étape de rotation du système optique autour de son axe optique au cours de l'acquisition de la deuxième séquence d'images ;
- l'étape de traitement comprend : la détermination d'une table de gain intermédiaire définie par $TdG(i,j)$ =mean(mean($Sens_I$))./$Sens_I(i,j)$ avec Sensl= (moy2-moy1) moy1 et moy2 étant les moyennes des images de chacune des première et deuxième séquences d'images ; et i et j les index de position du pixel correspondant dans la matrice de pixels ; la détermination de la table de gain courante, dite TdGc de la manière suivante TdGc = $TdG_u$_BF + $TdG_u$_HF / $TdG_{init}$_HF * $TdG_k$_HF avec : $TdG_u$_BF les composantes basses fréquences de la table de gain usine, $TdG_u$_HF les composantes hautes fréquences de la table de gain usine ; $TdG_{init}$HF une table de gain déterminée à la première mise en service du capteur infrarouge.

L'invention propose, selon un deuxième aspect, un capteur infrarouge selon la revendication 1. Ce capteur infrarouge comprend un système optique, une matrice de pixels disposée dans le plan focal du système optique, le système optique permettant de focaliser un rayonnement sur la matrice de pixels, ledit système comprenant des moyens de commutation du système optique dans un mode d'acquisition nominal selon lequel un rayonnement d'une scène observée est imagé ou dans un mode de calibration selon lequel le système optique est configuré pour imager le rayonnement d'un corps noir ou le rayonnement de la matrice de pixels réfléchi partiellement, ledit capteur comprenant une unité de traitement configurée pour mettre en oeuvre un procédé selon le premier aspect de l'invention.

L'invention, selon le deuxième aspect, est avantageusement complétée par les caractéristiques suivantes, prises seules ou en une quelconque de leur combinaison techniquement possible :

- le système optique comprend un dispositif réfléchissant d'un rayonnement incident, le système optique étant configuré pour qu'en mode de calibration ledit dispositif réfléchissant image partiellement le rayonnement de la matrice de pixels ;
- le système optique comprend un dispositif à quatre miroirs, ledit dispositif pouvant commuter du mode d'acquisition nominal au mode de calibration de sorte à ce que en mode nominal le premier miroir comprend une face réfléchissante parallèle à la face réfléchissante d'un deuxième miroir qui est perpendiculaire à la face réfléchissante d'un troisième miroir qui est parallèle à la face réfléchissante d'un quatrième miroir, en mode de calibration, selon une première position du système optique, le premier miroir est agencé pour réfléchir vers le deuxième miroir le rayonnement d'un corps noir issu d'une plaque peinte en noir disposée entre le premier miroir et le quatrième miroir ou selon une deuxième position du système optique réfléchir le rayonnement issu du dispositif réfléchissant disposé entre le quatrième miroir et le premier miroir ;
- le dispositif réfléchissant est une matrice à coins de cube disposée sur une plaque ;

L'invention propose, selon un troisième aspect, un produit programme d'ordinateur comprenant des instructions de code pour mettre en oeuvre un procédé selon le premier aspect de l'invention, lorsque celui-ci est exécuté par un ordinateur.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1,
- la figure 2 et
- la figure 3 illustrent un capteur infrarouge selon l'invention ;
- la figure 4 illustre un procédé d'obtention d'une table de gain usine ;
- la figure 5 illustre un procédé de mise à jour d'une table de gain au cours de la vie du produit selon l'invention.

Sur l'ensemble des figures les éléments similaires portent des références identiques.

DESCRIPTION DETAILLEE

*Structure du capteur*

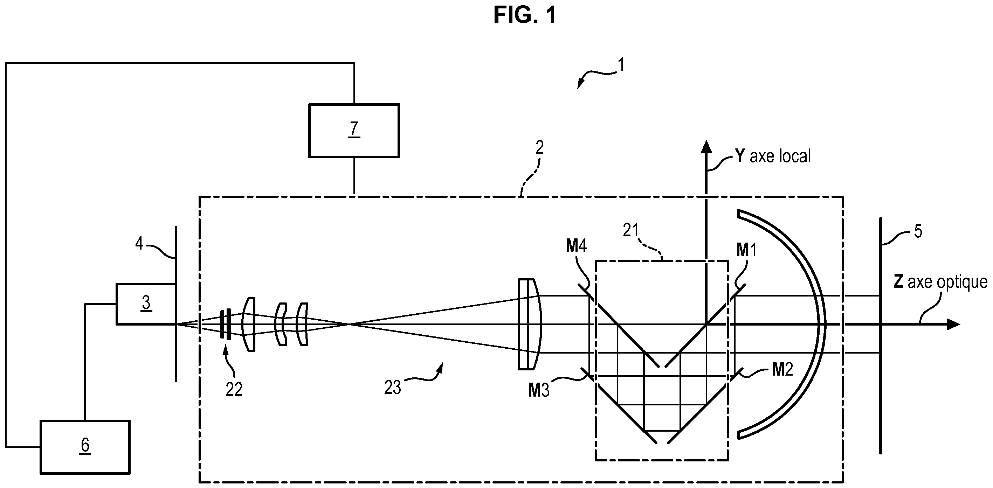

La figure 1 illustre un capteur infrarouge 1 comprenant un système optique 2 et une matrice de pixels 3 disposée dans le plan focal 4 du système optique 2, qui est une matrice refroidie à une température typiquement comprise entre -195°C et - 120°c. Un tel refroidissement permet d'éliminer des courants parasites tels que les courant d'obscurité ou thermique. Le système optique 2 est configuré pour imager l'image d'une scène 5 à l'infini dans un mode de fonctionnement nominal du capteur 1. Le système optique 2 présente un axe optique Z.
Le système optique 2 comprend notamment un dispositif 21 à miroirs permettant d'amener un rayonnement d'une scène observée par un miroir d'entrée M1 vers une pupille 22 du système optique 2 laquelle focalise le rayonnement vers le plan focal 4. Entre le dispositif à miroirs et la pupille 22 sont disposées une ou plusieurs lentilles 23. Le dispositif 21 à miroirs est orientable autour de l'axe optique Z qui passe par les centres des miroirs M1 et M4 pour la position illustrée sur la figure 1. En outre, le premier miroir M1 peut tourner autour d'un axe local Y perpendiculaire à l'axe optique Z et qui passe par les centres des miroirs M1 et M2 pour la position illustrée sur la figure 1.
Une unité de traitement 6 est connectée à la matrice de pixels 3 et au système optique 2 et est configurée pour mettre en oeuvre un procédé de calibrage qui sera décrit ci-après.
La matrice de pixels 3 est caractérisée par une table de gain. Cette table de gain permet d'appliquer une correction de gain sur l'image acquise par la matrice de pixels 3. Cette table de gain est mise à jour au cours de la vie du capteur au cours d'un procédé de calibrage qui sera décrit plus loin.
A ce titre, le capteur infrarouge 1 peut fonctionner selon deux modes :

- un mode nominal selon lequel il permet d'imager une scène à l'infini. Il s'agit du fonctionnement normal du capteur ;
- un mode de calibration selon lequel la table de gain de la matrice de pixels est mise à jour.

A ce titre, le capteur 1 comprend une unité 7 permettant de commuter du mode nominal au mode de calibration. En particulier, cette unité 7 permet de configurer le système optique 2 pour chacun des modes.
Le système optique 2 comprend un dispositif 21 à miroirs qui permet d'amener le rayonnement vers la pupille 22. Le dispositif 21 comprend plus particulièrement quatre miroirs M1 à M4, où le premier miroir M1 est un miroir d'entrée dans le système optique 2, qui capte le rayonnement d'une scène qui est à imager par la matrice de pixels. Comme indiqué précédemment, l'ensemble des quatre miroirs M1, M2, M3, M4 est mobile en rotation autour de l'axe optique Z ; en outre selon l'invention au moins le premier miroir M1 peut aussi être pivoté autour de l'axe Y.
On précisera que l'axe Y est un axe local, défini dans le repère tournant du dispositif 21 à miroirs. Plus précisément M1 tourne autour de l'axe local Y qui est défini par la droite reliant les centres des miroirs M1 et M2 et cet axe local Y tourne quand les 4 miroirs du dispositif 21 à miroirs tournent autour de l'axe Z.
On comprend que selon le mode de fonctionnement, les miroirs M1, M2, M3, M4 peuvent être disposés différemment.
Dans le mode nominal illustré sur la figure 1, le système optique 2 est configuré pour permettre d'imager une scène à l'infini, face au capteur. La configuration du dispositif 21 de quatre miroirs correspondant à ce mode de fonctionnement est la suivante : le premier miroir M1 est parallèle à un deuxième miroir M2, un troisième miroir M3 est perpendiculaire au deuxième miroir M2, un quatrième miroir M4 est parallèle au troisième miroir M3 et est perpendiculaire au premier miroir M1. Les faces réfléchissantes de ces quatre miroirs sont telles que le rayonnement d'une scène 5 à l'infini entre par le miroir d'entrée M1 puis va vers M2 puis va vers M3 puis va vers M4 pour aller dans la pupille 22 en passant par les lentilles 23.
Le système optique 2 comprend en outre deux éléments supplémentaires : un corps noir CN, typiquement un dispositif tel qu'une plaque, qui est peinte en noir ; et un dispositif réfléchissant MCC. Ces deux éléments sont positionnés dans l'espace entre le miroir M4 et le miroir M1, de manière à être chacun accessible dans une position respective du premier miroir M1. C'est-à-dire que le miroir M1 peut être pivoté d'un côté ou de l'autre par rapport à sa position nominale (celle de la figure 1). Le dispositif réfléchissant MCC et le corps noirs CN interviennent dans le mode de calibration. Ils sont disposés dans le dispositif 21 à miroirs, de manière solidaire, et de manière à être hors champ d'acquisition dans le mode nominal de fonctionnement, et remplir leur rôle, en lien avec le miroir M1, en mode de calibration.
Dans ce mode de calibration, le système optique 2 prend successivement deux positions différentes qui servent à des étapes consécutives du procédé de calibration, chaque position correspondant à une configuration dans laquelle le capteur peut imager une source infrarouge, une première position dans laquelle le capteur peut acquérir l'image d'une source infrarouge à une première température constituée par le corps noir CN qui est à la température interne du capteur, judicieusement placé entre les miroirs M1 et M4, le miroir d'entrée M1 étant convenablement orienté pour recevoir et transmettre le rayonnement infrarouge émis par le corps noir ; et une deuxième position où l'image d'une source infrarouge à la température de la matrice de pixels est virtuellement formée au moyen du dispositif réfléchissant MCC judicieusement placé entre les miroirs M1 et M4, le miroir M1 étant convenablement orienté pour recevoir et transmettre le rayonnement infrarouge réfléchi par le dispositif réfléchissant.

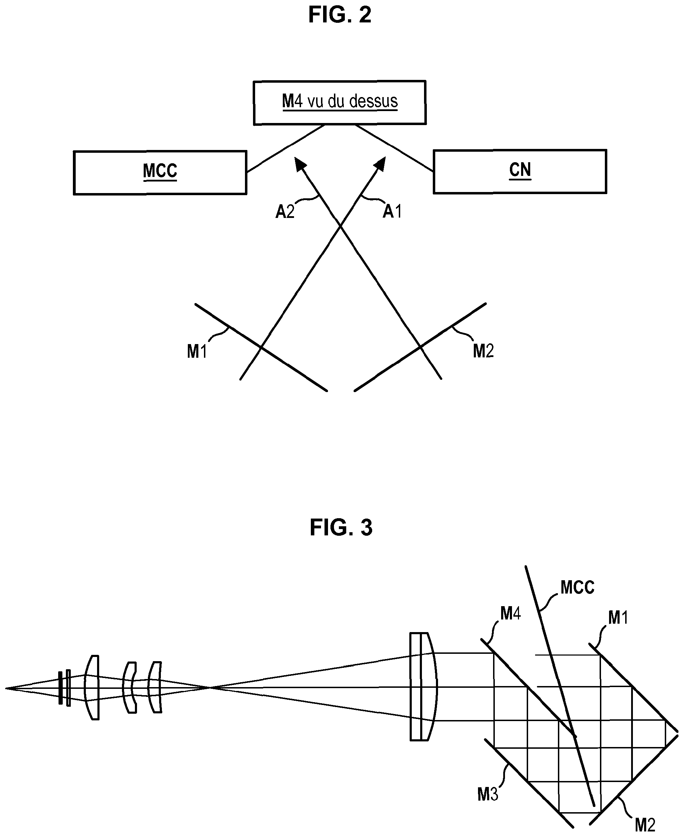

Comme schématiquement illustré en vue de dessus à la figure 2 (vue schématique de dessus), dans le mode calibration, le corps noir CN et le dispositif réfléchissant MCC sont chacun disposés dans l'espace libre entre les miroirs M1 et M4 tel que pour la première position, le premier miroir M1 d'entrée dans le système optique 2 qui capte le rayonnement d'une scène à imager par la matrice de pixels est pivoté d'un premier côté, par rapport à sa position en mode nominal, autour de l'axe local Y (figure 1) pour que sa face réfléchissante regarde le corps noir CN. Selon cette position, le premier miroir M1 est pivoté d'un côté autour de l'axe local Y pour être orienté de sorte que son axe de visée A1 regarde le corps noir CN. Pour la deuxième position illustrée aussi sur la figure 2 le premier miroir M1 est pivoté de l'autre côté autour de l'axe local Y, par rapport à sa position en mode nominal, pour que sa face réfléchissante regarde le dispositif réfléchissant MCC, son axe de visée A2 étant orienté en conséquence.

Ainsi, le système optique 2 permet d'imager en mode calibration deux scènes à deux températures différentes simplement en agissant sur la position M1 pour imager le corps noir CN qui est à la température interne du capteur, ou imager une image du plan focal lui-même, au moyen du dispositif réfléchissant MCC, le plan focal étant habituellement à une température différente, contrôlée par un dispositif de refroidissement de la matrice de pixels.

De manière avantageuse, le dispositif réfléchissant MCC est une matrice de coins de cube disposée sur une plaque. Un coin de cube est un élément bien connu, utilisé dans de nombreuses applications telles que :

- retro-réfléchisseurs de roues de vélo ;
- retro-réfléchisseurs en bord de route ;
- télémétrie.

La propriété fondamentale d'un coin de cube est de renvoyer dans la direction d'incidence les rayons réfléchis par les trois surfaces de chaque élément unitaire. Afin d'augmenter l'énergie renvoyée en rendant compact et robuste le réfléchisseur, plusieurs coins de cube sont mis côte-côte, formant une matrice de coins de cube. Les rayons réfléchis sont parallèles aux rayons incidents, mais pas superposés. Les trois réflexions sur les faces de chaque coin de cube décalent le faisceau. Dans le cadre des applications usuelles, souvent à grande distance, l'énergie rétro-diffusée et captée en retour est suffisante pour la fonction recherchée.

Ainsi dans le cadre du capteur illustré sur les figures, dans le mode calibration, lorsque le premier miroir M1 est dans la première position, il réfléchit le rayonnement du corps noir, positionné derrière le quatrième miroir M4, cela permet d'obtenir une source émettrice à une première température contrôlée correspondant à la température interne du produit.

En outre, lorsque le premier miroir M1 est dans la deuxième position, il réfléchit le rayonnement de la matrice de coins de cube MCC vers la matrice plan focal. Il s'agit en fait principalement du rayonnement de la matrice plan focal réfléchi par la matrice de coins de cube MCC. En effet, le décalage des faisceaux réfléchis implique que tous les rayons émis par la matrice de pixels ne re-rentrent pas dans la matrice de pixels : tous les rayons issus de la matrice pixels ne sont pas tous réfléchis vers la matrice de pixels.

Dès lors comme la matrice de pixels est refroidie à une température très différente de la température interne du produit, l'image issue de la réflexion par la matrice de coins de cube MCC correspond à l'image d'une source à une deuxième température contrôlée, qui est la température de la matrice de pixels, différente de la température interne. Dans un exemple pratique réaliste, la température interne du produit est comprise entre -40°C et +110°C tandis que la température de la matrice de pixels est comprise entre -195°C et -120°C.

Il est ainsi possible d'acquérir deux séquences d'images correspondant à deux sources émettrices à deux températures différentes, qui sont la température interne du système optique et la température propre de l'imageur qui est refroidi.

Ceci est obtenu à moindre coût en termes d'intégration physique dans le système optronique tant en termes d'encombrement que d'électronique, car le corps noir CN et l'élément réfléchissant MCC qui permettent de réaliser deux sources infrarouges émettant à des températures différentes, sont placés dans l'espace libre entre les miroirs M1 et M4, de manière à être hors champ d'acquisition en mode de fonctionnement opérationnel de la tête optique, lorsque le miroir M1 est dans sa position nominale, parallèle au miroir M4. Ces éléments supplémentaires CN et MCC sont des éléments passifs, ne nécessitant pas d'électronique associée. Le mécanisme de contrôle électronique de position du miroir M1 permettant dans le mode de calibration d'imager ces deux sources infrarouges ne pose pas de difficultés de réalisation ni d'intégration. Typiquement, un dispositif de contrôle de position (orientation) du miroir M1 par rapport à l'axe local Y est initialisé avec une valeur de position nominale, une valeur de position correspondant au mode de capture du rayonnement du corps noir (première séquence d'acquisition en phase de calibration) et une valeur de position correspondant au mode capture du rayonnement du dispositif réfléchissant MCC (deuxième séquence d'acquisition en phase de calibration). La position du miroir M1 est ainsi contrôlée en fonction du mode de fonctionnement en cours.

Un tel système optique permet comme on va le décrire, de réaliser une calibration in situ du capteur, permettant au cours de la vie du capteur, sans besoin de démontage, de mettre à jour la table de gain des pixels utilisée en nominal pour améliorer la qualité d'image, tenant compte des effets de vieillissement des pixels, mais aussi, comme on l'explique plus loin, des variations propres des pixels dits atypiques.

Avant de décrire plus en détails le procédé de calibration selon l'invention, on rappelle que le capteur est calibré sur banc en usine, pour notamment établir une table de gain usine, $TdG_u$.

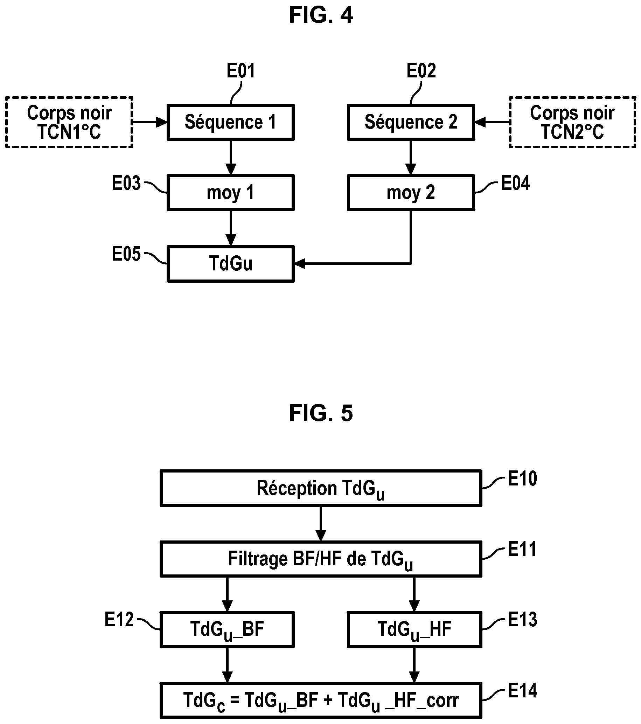

Cette table de gain usine TdGu est obtenue de la manière usuelle suivante, schématiquement illustrée sur la figure 4. Le capteur est positionné de manière à imager un corps noir situé en face du capteur. On note que l'acquisition s'effectue pendant un temps d'intégration Tint. Ce temps d'intégration est conservé pendant le mode de calibration selon l'invention et en mode nominal. De cette façon, on s'affranchit de la variabilité de l'offset avec le temps d'intégration.

Une première séquence d'images du corps noir à une première température TCN1 est acquise (étape E01), par exemple à 15°C. Une deuxième séquence d'images du corps noir porté à une deuxième température TCN2 est acquise (étape E2), par exemple à 35°C.

Les images obtenues sont des images matricielles qui fournissent pour chaque pixel de la matrice de pixels, la quantité de signal intégrée par le pixel pendant la durée d'intégration Tint. Dans la suite, le terme image est employé pour désigner l'opération - d'acquisition d'images - du capteur matriciel, tandis que le terme matrice employé seul, ou l'expression matrice image, désigne l'ensemble des signaux acquis par les pixels lors d'une acquisition d'image qui forment donc une représentation de l'image. La dimension des matrices représentant les images correspond à la dimension de la matrice de pixels du capteur.

Chaque séquence d'images est ensuite moyennée afin de supprimer le bruit temporel de Poisson notamment (étapes E03 et E04). On calcule ainsi respectivement pour la première et la deuxième séquence d'images, une matrice moyenne, respectivement $moy1_0$ et $moy2_0$, de tailles identiques, correspondant à la dimension des images acquises, pour respectivement la première température TCN1 et la deuxième température TCN2.

La table de gain usine $TdG_u$ est alors calculée à partir de ces deux matrices moyennes $moy1_0$ et $moy2_0$. C'est l'étape E05 de la figure 4, et ce calcul s'écrit de la manière suivante :

$$(EQ0) : \quad TdG_u(i,j) = mean_i(mean_j(SensI_0))/SensI_0(i,j)$$

avec $SensI_0(i,j) = (moy2_0(i,j) - moy1_0(i,j))$ , correspondant à une normalisation des sensibilités (pentes) des pixels, avec $moy1_0$ et $moy2_0$, des moyennes sur l'axe temps.

Chaque pixel i,j, a une correction de gain qui est égale au rapport entre la différence des moyennes spatiales des images $moy1_0$, $moy2_0$ et la différence des valeurs du pixel i,j dans ces deux images moyennes, $moy1_0(i,j)$, $moy2_0(i,j)$.

Ceci étant expliqué, le procédé de calibration selon l'invention permet de mettre à jour, c'est-à-dire de corriger, la table de gain usine, pour tenir compte des variations des réponses des pixels au cours de la vie du produit, le capteur infrarouge, qu'il s'agisse des effets du vieillissement des pixels, ou même de variations atypiques de pixels de la matrice de pixels du capteur.

S'agissant du gain des pixels, ces variations se traduisent en pratique par une dispersion de la réponse haute fréquence des pixels.

Le procédé selon l'invention permet de corriger au cours de la vie du capteur, les composantes haute fréquence de la table de gain usine, pour tenir compte de l'évolution de la réponse haute fréquence des pixels avec le temps.

Comme schématiquement illustré à la figure 5, à la mise en service du capteur, l'unité de traitement contient la table de gain usine notée $TdG_u$ (étape E10) qui aura été obtenue comme décrit supra (figure 4). On sépare les composantes basse fréquence et haute fréquence de cette table $TdG_u$ (étapes E12, E13, figure 5), par exemple au moyen d'une base polynomiale de type Zernike ou Legendre. On obtient une table de gain usine "BF" et une table de gain usine "HF" que l'on note $TdG_u\_BF$ et $TdG_u\_HF$.

Le procédé selon l'invention permet alors dans une étape E14, de calculer une table de gain courante $TdG_c$, à partir de la table de gain usine "BF" et d'une table de gain usine "HF" corrigée des variations des pixels depuis la mise en service du produit. On note $TdG_u\_HF\_corr$ cette table de gain corrigée haute fréquence. La table de gain courante $TdG_c$ est celle qui est appliquée pour améliorer la qualité des images fournies par le capteur.

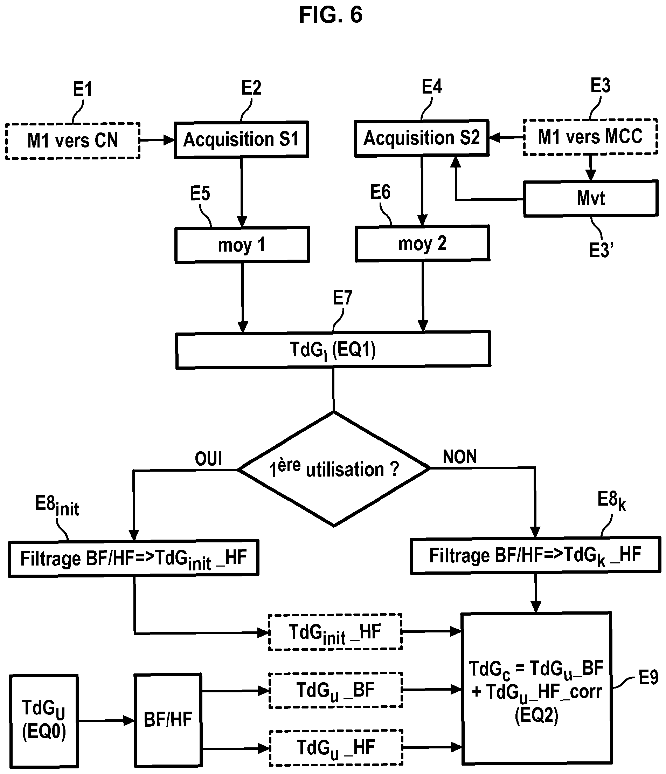

Le procédé selon l'invention permettant de calculer la table de gain corrigée haute fréquence et mettre à jour la table de gain courante du capteur est plus particulièrement illustré à la figure 6. Il est réalisé in situ, en utilisant le mode de calibration du système optique permettant de manière simple d'imager deux sources de températures différentes.

Il comprend une séquence comprenant des étapes d'acquisition de séquences d'images des deux sources de température différentes, en pilotant de manière ad hoc, c'est-à-dire en pivotant, autour de l'axe local Y, le miroir M1 comme expliqué précédemment, et grâce aux éléments passifs intégrés CN et MCC dans le dispositif 21 à miroirs, et des étapes de traitement de ces séquences d'images, pour calculer une table de gain sur la base d'une formule EQ1, similaire à la formule EQ0 décrite supra en relation avec la figure 4, mais appliquée aux séquences d'images des sources de températures différentes réalisées in situ, par le capteur.

Cette séquence d'étapes incluant le calcul d'une table de gain, que l'on appelle table de gain intermédiaire, car qualifiant la réponse du capteur à un moment de la vie opérationnelle du capteur, est réalisée une première fois, à la mise en service, correspondant au début de vie opérationnelle du dispositif optronique intégrant le capteur. On obtient une table de gain intermédiaire initiale, que l'on filtre pour ne conserver que les composantes haute fréquence de cette table. On note cette table TdGinit_HF, qui sert de référence pour mesurer la variation de gain à venir au cours de la vie du capteur.

Ensuite, lorsque que l'on doit réaliser une mise à jour de la table de gain usine, on exécute une nouvelle itération de la séquence d'étapes pour calculer une nouvelle table de gain intermédiaire, à laquelle on applique les mêmes fonctions de filtrage utilisées pour la table de gain intermédiaire initiale pour ne conserver que les composantes hautes fréquences. On note cette table $TdG_k\_HF$. L'indice k est utilisé pour signifier qu'elle est calculée au cours d'une k-ième itération de l'étape de calcul, avec k >1.

On peut alors corriger la table de gain usine HF des variations de gain des pixels depuis la mise en service, sur la base de ces deux tables $TdG_{init}\_HF$ et $TdG_k\_HF$.

Ainsi, dans l'invention, la table de gain courante $TdG_c$ appliquée en opérationnel par le capteur correspond à la somme de la partie BF de la table de gain usine, notée $TdG_u\_BF$, avec la partie HF corrigée de la table de gain usine, notée $TdG_u\_HF\_corr$ (Figure 5). C'est précisément ce dernier terme qui est calculé et mis à jour, de manière intégrée, in situ, pendant la vie du capteur, par le mode de calibration de l'invention.

De manière plus détaillée et en référence à la figure 6, le procédé comprend ainsi une première séquence d'une étape d'acquisition de deux séquences d'images, correspondant à deux sources infrarouges à deux températures différentes, et d'une étape de calcul d'une table de gain dite intermédiaire notée $TdG_l$. Cette première séquence est commune pour la phase d'initialisation $E8_{init}$ et les phases itératives suivantes de calibration $E8_k$.

Pour l'étape d'acquisition, le système optique est par exemple d'abord positionné de manière à ce que le corps noir soit imagé (étape E1). Une première séquence d'images du corps noir CN est acquise (étape E2). Cela correspond à l'image d'une source émettrice à une première température, qui est la température interne du capteur.

Le système optique est ensuite positionné de manière à ce que la matrice de coins de cube MCC soit imagée (étape E3). Une deuxième séquence d'images qui correspond au rayonnement de la matrice de pixels partiellement réfléchi par la matrice MCC est alors acquise (étape E3).

De manière avantageuse, au cours de cette étape le dispositif optique 21 est tournant autour de son axe Z (étape E3'). Par ce mouvement rotatif, on compense, en les moyennant, les perturbations HF des arêtes des coins cubes de la matrice MCC.

Ensuite, les images de chaque séquence sont moyennées afin de supprimer le bruit temporel de Poisson notamment (étapes E5 et E6). On obtient ainsi pour la première et la deuxième séquence d'images, respectivement une matrice moy1 et une matrice moy2 qui sont de tailles identiques à la dimension des images.

On calcule alors à l'étape E7, la table de gain intermédiaire, notée $TdG_l$. Cette table de gain intermédiaire est obtenue de manière similaire à la table de gain usine, en utilisant la formule EQ0 mais appliquée aux matrices moyennes moy1 et moy2 calculées sur les première et deuxième séquences d'images issues des étapes E1 à E4 du procédé de l'invention. On note EQ1 cette formule, qui si on utilise les notations usuelles Maltab™ s'écrit alors :

$$(EQ1): \quad TdG_l(i,j)=mean(mean(Sens_l))./Sens_l(i,j)$$

$$avec\ Sens_l = (moy2-moy1)$$

La table de gain intermédiaire obtenue est ensuite filtrée pour ne conserver que les composantes haute fréquence.

Lors de la première itération, à la mise en service du produit, de cette séquence d'étapes E1 à E7 d'acquisition et traitement des première et deuxième séquences d'images, de calcul EQ1 et de filtrage, on obtient ainsi les composantes haute-fréquence $TdG_{init}\_HF$ de la table de gain intermédiaire, représentatives de la réponse du capteur à la mise en service (étape $E8_{init}$). Cette première itération permet un calibrage de la fonction de correction (de mise à jour) du procédé selon l'invention, similaire à une mesure de fonction de transfert du système de calibration in situ.

Ensuite, à chaque itération suivante de la séquence d'étapes E1 à E7, déclenchée au cours de la vie du capteur, on obtient à l'étape $8_k$ les composantes haute-fréquence $TdG_k\_HF$ de la table de gain intermédiaire HF représentatives de la réponse courante du capteur à ce moment.

La variation de gain (composante HF) depuis la mise en service peut ainsi être calculée par référence à la table de gain intermédiaire HF initiale $TdG_{init}\_HF$.

La table de gain courante peut alors être mise à jour, dans une étape E9, qui ne prend en compte que la variation de gain des pixels, depuis la mise en service du capteur, comme suit :

$$\text{(EQ2)}: \text{TdG}_c = \text{TdG}_c = \text{TdG}_u\_\text{BF} + \text{TdG}_u\_\text{HF\_corr}$$

$$\text{avec TdG}_u\_\text{HF\_corr} = \text{TdG}_u\_\text{BF} + \text{TdG}_u\_\text{HF} / \text{TdG}_{init}\_\text{HF} * \text{TdG}_k\_\text{HF}$$

où

- $\text{TdG}_u\_\text{BF}$ les composantes basses fréquences de la table de gain usine,
- $\text{TdG}_u\_\text{HF}$ les composantes hautes fréquences de la table de gain usine.
- $\text{TdG}_{init}\_\text{HF}$ et $\text{TdG}_k\_\text{HF}$ les composantes hautes fréquences de la table de gain intermédiaire initiale et à l'itération k, calculées in situ dans le produit.

Cette table de gain courante TdGc est celle utilisée pour corriger les images acquises en mode nominal par le capteur, jusqu'à la prochaine mise à jour.

Le procédé de l'invention est simple à utiliser et facile à intégrer. En outre, la correction de gain implémentée ne prenant en compte que les composantes HF des tables de gain, cela permet avantageusement de s'affranchir de différentes perturbations basse-fréquence induites par les éléments utilisés pour la calibration.

En effet l'utilisation de la matrice de coins de cube MCC pour obtenir la deuxième séquence d'images correspondant au rayonnement d'une source infrarouge à une température qui est la température à laquelle la matrice de pixels est refroidie, induit des perturbations basse fréquence dans les images. Ce sont

- des effets d'ombrage, induits par la matrice MCC compte-tenu de sa position dans le champ optique,
- des perturbations liées au double passage du rayonnement dans le dispositif optique 2.

Ces perturbations BF indésirables liées à l'utilisation de la matrice coins de cube restent ainsi sans effet sur la calibration selon l'invention.

L'utilisation de la matrice à coins de cube MCC provoque aussi des perturbations haute-fréquences, par les effets de réflexion sur les arêtes des coins de cube de la matrice MCC.

On propose avantageusement d'annuler ces perturbations HF dans les signaux d'image, en imposant un mouvement rotatif au système optique 2 incluant l'ensemble des 4 miroirs, le corps CN et la matrice à coins de cube MCC, autour de l'axe optique Z pendant l'acquisition de la deuxième séquence d'images, de sorte à moyenner ces perturbations HF (cf figure 1). Cela correspond à l'étape E3' du procédé de l'invention décrite précédemment et illustrée à la figure 6.

Enfin, le procédé selon l'invention qui permet de corriger in situ le gain des pixels au cours de la vie du capteur, permet naturellement de traiter le cas des pixels atypiques, dont le gain est susceptible de varier au cours de la vie du produit, indépendamment des effets du vieillissement. A chaque itération du procédé, la table de gain est mise à jour, traitant de fait ce cas de pixels atypiques éventuels.

Il n'est plus besoin de rechercher, au stade des tests en usine, d'éventuels pixels atypiques, ce qui implique des mesures complexes avec calculs de probabilités, pour détecter des pixels atypiques et les déclarer ou non défectueux, avec un critère généralement plus sévère que nécessaire.

Ainsi, au moyen par l'intégration simple et à isovolume de deux éléments, corps noir et matrice réfléchissante type MCC, dans la tête optique, on peut par des traitements simples nécessitant peu de calculs sur les séquences d'images obtenues, disposer d'une table de gain courante des pixels du capteur qui suit l'évolution des pixels au cours de la vie du produit, et cela en fonctionnement, sans nécessité de démontage du capteur. La correction des images obtenue est ainsi optimisée, tenant compte aussi bien des variations propres aux éventuels pixels atypiques et des effets du vieillissement, et cela tout au long de la vie des produits.

**Revendications**

1. Capteur infrarouge (1) comprenant un système optique (2), une matrice de pixels (3) disposée dans le plan focal (4) du système optique (2), le système optique (2) permettant de focaliser un rayonnement sur la matrice de pixels (3), ledit système comprenant des moyens (5) de commutation du système optique (2) dans un mode d'acquisition nominal selon lequel un rayonnement d'une scène observée est imagé ou dans un mode de calibration selon lequel le système optique (2) est configuré pour imager le rayonnement d'un corps noir ou le rayonnement de la matrice de pixels réfléchi partiellement, le système optique comprenant un dispositif à quatre miroirs et un dispositif réfléchissant (MCC) d'un rayonnement incident, la matrice de pixels étant **caractérisée par** une table de gain des pixels, le dispositif étant tel que

en mode nominal le premier miroir (M1) comprend une face réfléchissante parallèle à la face réfléchissante d'un deuxième miroir qui est perpendiculaire à la face réfléchissante d'un troisième miroir (M3) qui est parallèle à la face réfléchissante d'un quatrième miroir (M4),

en mode de calibration, selon une première position du système optique (2), le premier miroir (M1) est agencé pour réfléchir vers le deuxième miroir (M2) le rayonnement d'un corps noir issu d'une plaque peinte en noir disposée entre le premier miroir (M1) et le quatrième miroir (M4) ou selon une deuxième position du système optique (2) réfléchir le rayonnement issu du dispositif réfléchissant (MCC) disposé entre le quatrième miroir (M4) et le premier miroir (M1), le dispositif réfléchissant (MCC) imageant partiellement le rayonnement de la matrice de pixels ledit capteur comprenant une unité de traitement (6) configurée pour mettre en œuvre, en mode calibration, les étapes suivantes : - acquisition (E2) par la matrice de pixels d'une première séquence d'images du rayonnement d'un écran noir (CN) correspondant à une scène à une première température ;

- acquisition (E4) par la matrice de pixels d'une deuxième séquence d'images du rayonnement de la matrice de pixels réfléchi partiellement correspondant à une scène à une deuxième température ;
- traitement (E5, E6, E7, E8, E9) des première et deuxième séquences d'images de manière à mettre à jour la table de gain en calculant une correction représentative du vieillissement et de la réponse des pixels de la matrice de pixels.

2. Capteur selon la revendication 1, dans lequel l'unité de traitement est configurée pour commander une rotation du système optique autour de son axe optique (Z) au cours de l'acquisition de la deuxième séquence d'images.

3. Capteur selon l'une quelconque des revendications précédentes, dans lequel dispositif réfléchissant est une matrice à coins de cube disposée sur une plaque.

4. Capteur selon l'une quelconque des revendications précédentes, dans lequel l'unité de traitement est configurée pour mettre en œuvre l'étape de traitement comprenant :

- la détermination (E7) d'une table de gain intermédiaire définie par $TdG(i,j)=mean(mean(Sens_l))./Sens_l(i,j)$ avec $Sensl= (moy2-moy1) moy1$ et $moy2$ étant les moyennes des images de chacune des première et deuxième séquences d'images ; et $i$ et $j$ les index de position du pixel correspondant dans la matrice de pixels
- la détermination (E9) de la table de gain courante, dite TdGc de la manière suivante $TdGc = TdG_u\_BF + TdG_u\_HF / TdG_{init}\_HF * TdG_k\_HF$
avec
- $TdG_u\_BF$ les composantes basses fréquences de la table de gain usine,
- $TdG_u\_HF$ les composantes hautes fréquences de la table de gain usine ;
- $TdG_{init}HF$ une table de gain déterminée à la première mise en service du capteur infrarouge.

5. Produit programme d'ordinateur comprenant des instructions de code pour mettre en oeuvre un procédé selon l'une des revendications 1 à 4, lorsque celui-ci est exécuté par un ordinateur.

**Patentansprüche**

1. Infrarotsensor (1), umfassend ein optisches System (2), eine Pixelmatrix (3), die in der Fokalebene (4) des optischen Systems (2) angeordnet ist, wobei das optische System (2) die Fokussierung einer Strahlung auf die Pixelmatrix (3) ermöglicht, wobei das System Mittel (5) zum Umschalten des optischen Systems (2) in einen nominalen Erfassungsmodus umfasst, gemäß dem eine Strahlung einer beobachteten Szene abgebildet wird, oder in einen Kalibrierungsmodus, gemäß dem das optische System (2) ausgelegt ist, um die Strahlung eines schwarzen Körpers oder die Strahlung der teilweise reflektierten Pixelmatrix abzubilden, wobei das optische System eine Vorrichtung mit vier Spiegeln und eine reflektierende Vorrichtung (MCC) einer einfallenden Strahlung umfasst, wobei Pixelmatrix durch eine Pixelverstärkungstabelle gekennzeichnet ist, wobei die Vorrichtung derart ist, dass

im nominalen Modus der erste Spiegel (M1) eine reflektierende Fläche umfasst, die parallel zu der reflektierenden Fläche eines zweiten Spiegels ist, die senkrecht zu der reflektierenden Fläche eines dritten Spiegels (M3) ist, die parallel zu der reflektierenden Fläche eines vierten Spiegels (M4) ist,
im Kalibrierungsmodus gemäß einer ersten Position des optischen Systems (2) der erste Spiegel (M1) eingerichtet ist, um die Strahlung eines schwarzen Körpers, die von einer schwarz lackierten Platte ausgeht, die zwischen dem ersten Spiegel (M1) und dem vierten Spiegel (M4) angeordnet ist, zum zweiten Spiegel (M2) zu reflektieren oder gemäß einer zweiten Position des optischen Systems (2) die Strahlung, die von der reflektierenden Vorrichtung (MCC) ausgeht, die zwischen dem vierten Spiegel (M4) und dem ersten Spiegel (M1) angeordnet ist, zu reflektieren, wobei die reflektierende Vorrichtung (MCC) die Strahlung der Pixelmatrix teilweise abbildet,

wobei der Sensor eine Verarbeitungseinheit (6) umfasst, die ausgelegt ist, um im Kalibrierungsmodus die folgenden Schritte auszuführen:

- Erfassung (E2) einer ersten Bildsequenz der Strahlung eines schwarzen Schirms (CN), die einer Szene mit einer ersten Temperatur entspricht, durch die Pixelmatrix;
- Erfassung (E4) einer zweiten Bildsequenz der Strahlung der teilweise reflektierten Pixelmatrix, die einer Szene mit einer zweiten Temperatur entspricht, durch die Pixelmatrix;
- Verarbeitung (E5, E6, E7, E8, E9) der ersten und zweiten Bildsequenz, um die Verstärkungstabelle zu aktualisieren, indem eine Korrektur berechnet wird, die für die Alterung und für die Reaktion der Pixel der Pixelmatrix repräsentativ ist.

2. Sensor nach Anspruch 1, wobei die Verarbeitungseinheit ausgelegt ist, um eine Drehung des optischen Systems um seine optische Achse (Z) während der Erfassung der zweiten Bildsequenz zu steuern.

3. Sensor nach einem der vorhergehenden Ansprüche, wobei die reflektierende Vorrichtung eine Würfeleckenmatrix ist, die auf einer Platte angeordnet ist.

4. Sensor nach einem der vorhergehenden Ansprüche, wobei die Verarbeitungseinheit ausgelegt ist, um den Verarbeitungsschritt durchzuführen, der umfasst:

- die Bestimmung (E7) einer Zwischenverstärkungstabelle, die durch TdG(i,j)=mean(mean(Sens$_l$))./Sens$_l$(i,j) definiert ist mit Sensl= (moy2-moy1), wobei moy1 und moy2 die Mittelwerte der Bilder jeder von der ersten und zweiten Bildsequenz sind; und i und j die Positionsindizes des entsprechenden Pixels in der Pixelmatrix,
- die Bestimmung (E9) der aktuellen Verstärkungstabelle, bezeichnet als TdGc, auf folgende Weise

$$TdGc = TdG_u\_BF + TdG_u\_HF \, / \, TdG_{init}\_HF \, {}^* \, TdG_k\_HF$$

mit
- TdG$_u$\_BF als niederfrequente Komponenten der Werks-Verstärkungstabelle,
- TdG$_u$\_HF als hochfrequente Komponenten der Werks-Verstärkungstabelle;
- TdG$_{init}$HF als eine Verstärkungstabelle, die bei der ersten Inbetriebnahme des Infrarotsensors bestimmt wird.

5. Rechnerprogrammprodukt, umfassend Codeanweisungen zur Ausführung eines Verfahrens nach einem der Ansprüche 1 bis 4, wenn es von einem Rechner ausgeführt wird.

**Claims**

1. An infrared sensor (1) comprising an optical system (2), a pixel array (3) arranged in the focal plane (4) of the optical system (2), the optical system (2) allowing radiation to be focused on the pixel array (3), said system comprising switching means (5) of the optical system (2) to a nominal acquisition mode in which radiation from an observed scene is imaged or to a calibration mode in which the optical system (2) is configured to image radiation from a black body or partially reflected radiation from the pixel array, the optical system comprising a device with four mirrors and a reflective device (MCC) of incident radiation, the device being such that:

in nominal mode, the first mirror (M1) has a reflective surface parallel to the reflective surface of a second mirror which is perpendicular to the reflective surface of a third mirror (M3) which is parallel to the reflective surface of a fourth mirror (M4),
in calibration mode, in a first position of the optical system (2), the first mirror (M1) is arranged to reflect toward the second mirror (M2) the radiation from a black body derived from a black-painted screen disposed between the first mirror (M1) and the fourth mirror (M4), or in a second position of the optical system (2) to reflect the radiation from the reflective device (MCC) arranged between the fourth mirror (M4) and the first mirror (M1), the reflective device (MCC) partially imaging radiation from the pixel array,

said sensor comprising a processing unit (6) configured in calibration mode to implement the following steps:

- acquisition (E2) by the pixel array of a first sequence of images of the radiation from a black body (CN) corresponding to a scene at a first temperature;
- acquisition (E4) by the pixel array of a second sequence of images of the partially reflected radiation from the pixel array corresponding to a scene at a second temperature;
- processing (E5, E6, E7, E8, E9) the first and second sequences of images to update the gain table by calculating a correction representing the ageing and response of the pixels of the pixel array.

2. The sensor according to claim 1, wherein the processing unit is configured to control rotation of the optical system about its optical axis (Z) when acquiring the second sequence of images.

3. The sensor according to any of the preceding claims, wherein the reflective device is a corner cube mirror arranged on a plate.

4. The sensor according to any of the preceding claims, wherein the processing unit is configured to implement the processing step comprising:

- determining (E7) an intermediate gain table defined by; $TdG(i,j)=mean(mean(Sens_l))./Sens_l(i,j)$ with $Sensl= (moy2-moy1)$, moy1 and moy2 being the mean of the images of each of the first and second sequences of images; and i and j being the position indexes of the corresponding pixel in the pixel array,
- determining (E9) the current gain table, called TdGc in the following manner:

$$TdGc = TdG_u\_BF + TdG_u\_HF / TdG_{init}\_HF * TdG_k\_HF$$

with:
- $TdG_u\_BF$ the low frequency components of the factory gain table;
- $TdG_u\_HF$ the high frequency components of the factory gain table;
- $TdG_{init}HF$ a gain table determined on first entry into service of the infrared sensor.

5. A computer programme product comprising code instructions to implement a method according to one of claims 1 to 4, when it is executed on a computer.

**FIG. 1**

EP 4 348 199 B1

## FIG. 2

| | M4 vu du dessus | |
|---|---|---|
| MCC | | CN |

A2    A1

M1    M2

## FIG. 3

MCC

M4    M1

M3    M2

## FIG. 4

```
                    E01                          E02
┌─────────────┐   ┌─────────────┐   ┌─────────────┐   ┌─────────────┐
│ Corps noir  │   │             │   │             │   │ Corps noir  │
│  TCN1°C     │──▶│ Séquence 1  │   │ Séquence 2  │◀──│  TCN2°C     │
└─────────────┘   └─────────────┘   └─────────────┘   └─────────────┘
                         │                 │
                         ▼                 ▼
     E03          ┌─────────────┐   ┌─────────────┐   E04
                  │    moy 1    │   │    moy 2    │
                  └─────────────┘   └─────────────┘
                         │                 │
                         ▼                 │
     E05          ┌─────────────┐          │
                  │    TdGu     │◀─────────┘
                  └─────────────┘
```

## FIG. 5

```
┌──────────────────────────────────────────────┐
│              Réception TdG_u                   │  E10
└──────────────────────────────────────────────┘
                        │
                        ▼
┌──────────────────────────────────────────────┐
│           Filtrage BF/HF de TdG_u              │  E11
└──────────────────────────────────────────────┘
              │                    │
              ▼                    ▼
E12   ┌───────────────┐    ┌───────────────┐   E13
      │   TdG_u_BF     │    │   TdG_u_HF     │
      └───────────────┘    └───────────────┘
              │                    │
              ▼                    ▼
┌──────────────────────────────────────────────┐
│   TdG_c = TdG_u_BF + TdG_u _HF_corr            │  E14
└──────────────────────────────────────────────┘
```

# FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4965448 A